# EUROPEAN PATENT SPECIFICATION

(11) **EP 3 077 868 B1**
(45) Date of publication and mention of the grant of the patent: **01.09.2021**
(21) Application number: 14870657.5
(22) Date of filing: 02.12.2014
(51) Int. Cl.: G02B 27/01, B64D 47/08, B64D 47/02, B64D 43/02, B64D 11/00, B64D 25/00, B64D 43/00

(54) **SYSTEM AND METHOD FOR ENHANCING VISION INSIDE AN AIRCRAFT COCKPIT**
SYSTEM UND METHODE ZUR VERBESSERUNG DER SICHT IN EINEM FLUGZEUGCOCKPIT
SYSTÈME ET PROCÉDÉ D'AMÉLIORATION DE LA VISION À L'INTÉRIEUR DU COCKPIT D'UN AVION

(30) Priority: 03.12.2013 US 201361911204 P
(43) Date of publication of application: 12.10.2016
(73) Proprietor: Federal Express Corporation, Memphis, TN 38125 (US)
(72) Inventor: KERNS, John Steven, Germantown, TN 38138 (US); POPP, James Bruce, Olive Branch, MS 38654 (US); KEETON, Robert Andrew, Memphis, TN 38120 (US)
(74) Representative: Finnegan Europe LLP
(86) International application number: PCT/US2014/068119
(87) International publication number: WO 2015/130360

(56) References cited:
- EP-A1- 0 947 974
- EP-A1- 1 121 959
- EP-A2- 0 511 154
- WO-A1-00/28281
- WO-A1-2009/082480
- GB-A- 2 273 054
- US-A- 3 574 283
- US-A1- 2003 002 164
- US-A1- 2005 237 226
- None

## Description

### Field of the Disclosure

This disclosure relates to a system and method for enhancing vision. In particular, this disclosure relates to a system and method for enhancing vision inside the cockpit of an aircraft, for example, when smoke and/or fumes are present in the cockpit.

### Background

Under certain conditions, it may be desirable to enhance and/or augment the vision of a pilot and/or a co-pilot in the cockpit of an aircraft. For example, during emergency conditions when smoke and/or fumes are present in the cockpit, it may become difficult or impossible to obtain sufficient visual reference, for example, to see the flight controls and/or instruments used for flying the aircraft, to safely land the aircraft. Moreover, items such as, for example, flight instruments, radio frequencies, autopilot settings, Flight Management Data, and aircraft systems status and controls, may be difficult or impossible to control or determine in a smoke-filled cockpit, which further jeopardizes guiding the aircraft to a successful landing.

Several instances of smoke and/or fire in the cockpit have led to catastrophic consequences. For example, in 1973 as a result of smoke in the cockpit attributed to a nitric acid spill in the aircraft, Pan Am flight 160 crashed, resulting in the deaths of all the crew members. More recently, United Parcel Service flight 6 crashed close to Dubai International Airport, resulting in the deaths all on board the flight. This crash was also attributed to smoke in the cockpit. In fact, smoke has been identified as a likely contributor to many aircraft lost to fire. For example, Swissair flight 111 crashed over the Atlantic Ocean within five miles of land, resulting in the deaths of the flight crew and 227 passengers. An electrical fire occurred in the aircraft, and it is believed that cockpit smoke contributed to crash. In another crash where only the flight crew survived, the surviving copilot indicated that smoke in the cockpit was a major factor leading to the crash.

Thus, it may be desirable to provide a system and method for enhancing vision in the cockpit of an aircraft when, for example, smoke and/or fumes are present in the cockpit, rendering it difficult to control the aircraft because the instruments and surroundings outside the aircraft are unable to be seen. In addition, it may be desirable to provide a system and method for enhancing vision in a cockpit of an aircraft so that more than a single pilot can view flight data and/or terrain features around the plane, for example, in the event one pilot becomes incapacitated. For example, in some systems, only the pilot can view at least certain parts of the flight data. In addition, it may be desirable to enhance the vision in the cockpit of an aircraft, for example, for training purposes, so that two or more pilots or observers may see the same flight data as the pilot. In addition, it may be desirable or necessary to enhance or augment a system for enhancing vision in the cockpit.

WO 00/28281 relates to a system for operating aircraft or other vessels in a smoke filled environment, which includes a face mask configured to surround a user's eyes and form an airtight seal against the user's face. The mask includes a screen viewable by the user for displaying critical operating system information that permits continued operation of the aircraft. A signal path means provides the display screen with appropriate signals from instrument display sources of the aircraft.

### SUMMARY

In accordance with the invention, there is provided: a system for enhancing vision inside an aircraft cockpit as recited by claim 1; and a method of enhancing a view of visual representations based on flight data associated with flight of an aircraft when a cockpit of the aircraft contains at least one of smoke and fumes as recited by claim 15.

One aspect of the disclosure relates to a system for enhancing vision inside an aircraft cockpit. The system for enhancing vision may include a primary display system configured to receive the signals related to flight data and display visual representations based on the flight data. The primary display system may include a data processor configured to output signals related to the flight data associated with flight of the aircraft. The primary display system may also include a primary display configured to receive the signals related to flight data and display visual representations based on the flight data. The system for enhancing vision may also include a supplemental display system configured to receive the signals related to the flight data and display visual representations based on the flight data. The supplemental display system may include a mask configured to provide a substantially sealed barrier between a wearer of the mask and at least one of smoke and fumes in the cockpit. The supplemental display system may also include a video display device associated with the mask. The video display device may be configured to receive the signals related to the flight data and display the visual representations based on the flight data, wherein the video display device is associated with the mask such that the wearer of the mask is able to see the visual representations based on the flight data displayed by the video display device.

Another aspect relates to a method of enhancing situational awareness of a pilot and/or a co-pilot when a cockpit of an aircraft is filled with smoke and fumes. The method may include combining and displaying enhanced visual reference of features outside the aircraft, augmenting visual reference inside the aircraft, and visual representations based on aircraft flight data, navigational data, and aircraft systems status.

Another aspect relates to a method of enhancing a view of visual representations based on flight data associated with flight of an aircraft when a cockpit of the aircraft contains at least one of smoke and fumes. The method may include generating signals related to the flight data associated with flight of the aircraft, and supplying the signals to a data processor configured provide signals related to the flight data associated with flight of the aircraft to a primary display device configured to display visual representations based on the flight data. The method may also include associating a supplemental display apparatus with the data processor. The supplemental display apparatus may include a mask configured to provide a substantially sealed barrier between a wearer of the mask and the at least one of smoke and fumes, and a video display device associated with the mask. The method may further include providing the signals indicative of the visual representations to the video display device, such that the wearer of the mask can view the visual representations via the video display device.

A further aspect of the disclosure, that is not claimed, relates to a system for providing multiple viewers in a cockpit of an aircraft with a common view of visual representations of flight data associated with flight of the aircraft. The system may include a data processor configured to output signals related to flight data associated with flight of the aircraft, and a primary display device configured to receive the signals related to the flight data and display visual representations based on the flight data. The primary display device may be configured to be viewed by a first viewer. The system may also include a supplemental display system configured to receive the signals related to the flight data and display visual representations based on the flight data. The supplemental display system may include a video display device, the video display device being configured to receive the signals related to the flight data and display the visual representations based on the flight data to a second viewer. The video display device may include at least one of glasses and a shield configured to be worn by the second viewer.

It is to be understood that both the foregoing general description and the following detailed description are exemplary and explanatory only and are not restrictive of the invention, as claimed.

The accompanying drawings, which are incorporated in and constitute a part of this specification, illustrate several embodiments of the disclosed systems and methods and together with the description, serve to explain the principles of the disclosed systems and methods.

### BRIEF DESCRIPTION OF THE DRAWINGS

Fig. 1 is a view of an exemplary embodiment of the cockpit of an exemplary aircraft.
Fig. 2 is an example of a view of an exemplary embodiment of a primary display device showing a combination of exemplary flight data and exemplary terrain features outside the aircraft.
Fig. 3 is a schematic view including an exemplary system for displaying visual representations of flight data associated with flight of the aircraft.
Fig. 4 is a perspective view of a person wearing an exemplary embodiment including a system for enhancing vision inside a cockpit of an aircraft.
Fig. 5 is a perspective view of a person wearing an exemplary embodiment including a system for enhancing vision inside a cockpit of an aircraft.
Fig. 6 is a schematic view of an exemplary system for displaying visual representations of flight data associated with flight of the aircraft.
Fig. 7 is a schematic view of an exemplary system for displaying visual representations of flight data associated with flight of the aircraft.

### DESCRIPTION OF EXEMPLARY EMBODIMENTS

Reference will now be made in detail to exemplary embodiments.

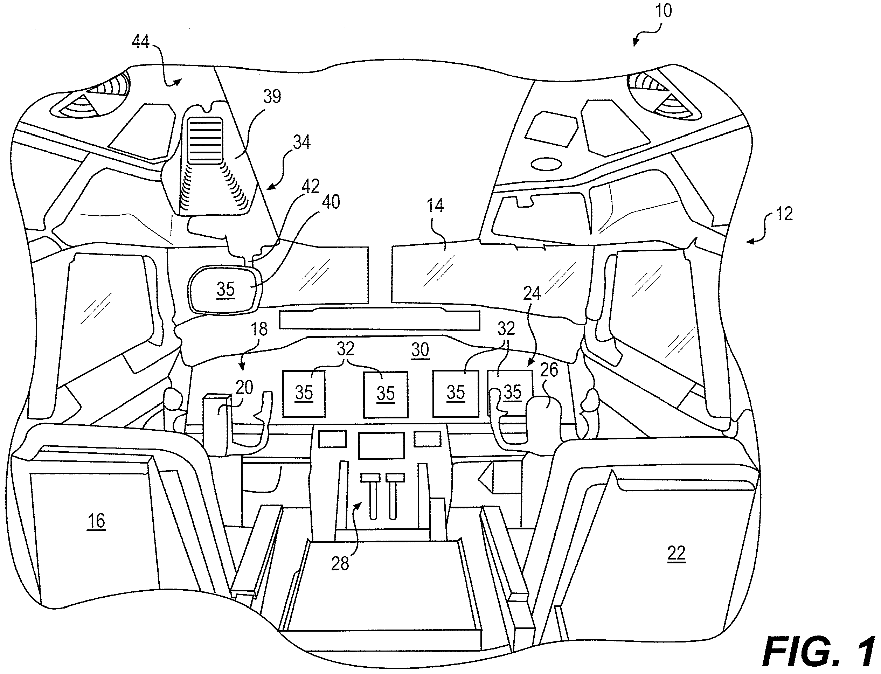

Fig. 1 shows an exemplary embodiment of an aircraft 10 having an exemplary cockpit 12. Exemplary aircraft 10 includes a windshield 14 configured to separate the inside of cockpit 12 from the exterior surroundings of aircraft 10 and protect the pilot or pilots from the environmental elements. Exemplary cockpit also includes a first seat 16 and a first set of controls 18 including a first yoke 20 for operation by a pilot. Exemplary cockpit 12 also includes a second seat 22 and a second set of controls 24 including a second yoke 26 for operation by a co-pilot. Exemplary cockpit 12 further includes throttle levers 28 for controlling engine throttle settings.

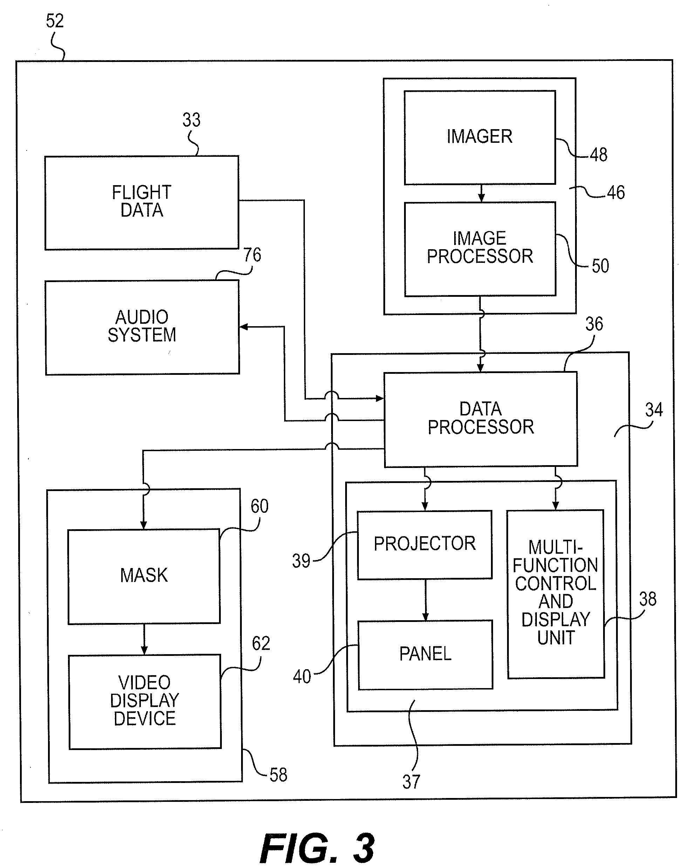

As shown in Fig. 1, exemplary cockpit 12 includes an instrument panel 30 including gauges and/or displays 32 for displaying flight data 33 (Fig. 3) associated with the flight of aircraft 10. For example, flight data 33 may include, for example, one or more of the following: air speed, vertical speed, attitude, heading, altitude, command guidance for landing approach, flight path deviation indications, flight path vector, flight path angle, and any other data associated with operation of the aircraft.

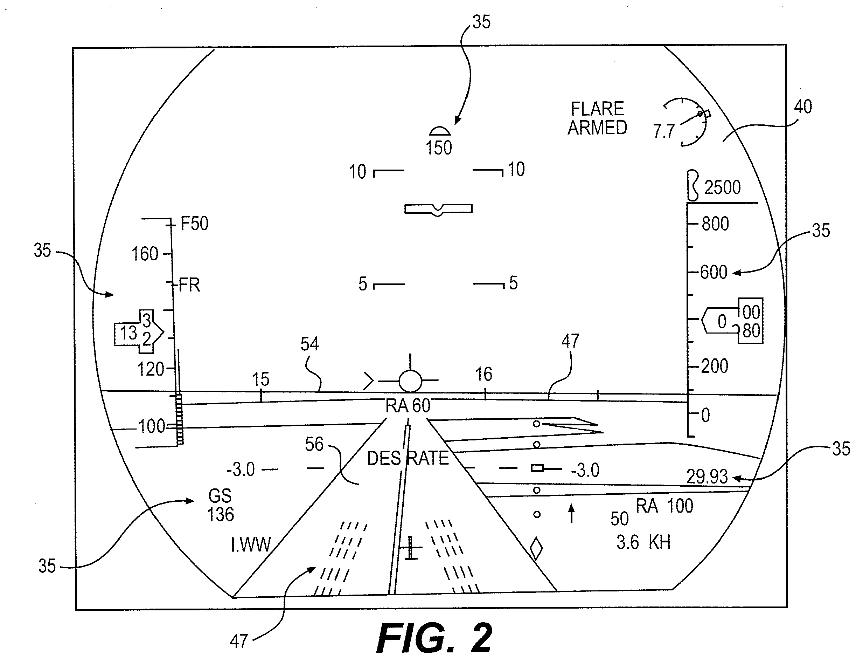

According to the exemplary embodiment shown in Figs. 1-3, aircraft 10 includes a primary display system 34 configured to display visual representations based on the flight data 33. Exemplary primary display system 34 includes a data processor 36 (see Fig. 3) configured to receive signals related to the flight data received from, for example, various sensors of aircraft 10 and/or external communications. For example, data processor 36 may take the form of a head-up display computer (HUD), which may receive signals from various sensors and systems of aircraft 10 and process such signals to provide data in a form that may be displayed as visual representations 35 (see, e.g., Fig. 2) of flight data for the pilot and/or co-pilot.

Primary display system 34 may also include a primary display device 37 including, for example, a multifunction control and display unit 38 (see, e.g., Fig. 3). Primary display device 37 may also include a projector 39 and a panel 40 configured to display projections emitted by projector 39. For example, projector 39 may take the form of an overhead unit (OHU) positioned such that it can project images onto panel 40, so that the pilot or co-pilot can view the projected images. Projector 39 may be configured to receive signals related to the flight data and project visual representations 35 based on the flight data onto panel 40, which displays the visual representations 35. According to some embodiments, panel 40 may be at least one of transparent and semi-transparent, such that it is possible for the pilot and/or co-pilot to simultaneously view the visual representations 35 and objects on the side of panel 40 opposite the pilot or co-pilot. For example, panel 40 may take the form of a combiner configured to display the visual representations 35 projected onto panel 40 by projector 39, while permitting the pilot and/or co-pilot to see terrain features through windshield 14 and outside aircraft 10.

As shown in Fig. 1, panel 40 may be supported in such a manner that panel 40 is in the pilot or co-pilot's field of view looking out windshield 14 with a head-up posture, thus permitting the visual representations 35 to be effectively projected onto the terrain surrounding aircraft 10 as the pilot or co-pilot looks through panel 40 and out windshield 14. For example, panel 40 may be supported by a support arm 42 suspended from the ceiling 44 of cockpit 12.

According to some embodiments, as shown in in Fig. 3, aircraft 10 may include a system 46 configured to enhance the view of objects 47 outside aircraft 10 (see also Fig. 2). Such a system 46 may be useful, for example, when weather conditions reduce the visibility from cockpit 12 of objects 47 outside aircraft 10. For example, due to adverse weather conditions, it may be difficult to see terrain features, features associated with airports, such as lights and runways, and other objects 47 relevant to flight of aircraft 10. Such objects 47 may be difficult to see during weather conditions such as, for example, cloudiness, fog, rain, haze, smoke, and snow. According to some embodiments, system 46 may take the form of an enhanced vision system (EVS), such as an enhanced flight vision system (EFVS).

As shown in Fig. 3, some embodiments of system 46 configured to enhance the view of objects 47 outside aircraft 10 include an imager 48 and an image processor 50. Imager 48 may provide signals indicative of objects outside aircraft 10 to image processor 50, and image processor 50 may be configured to process the signals and send the processed signals to data processor 36. Data processor 36 may further process the signals received from image processor 50 and/or combine the signals with signals associated with the flight data. According to some embodiments, combined signals may be sent to projector 39, which, in turn, projects them onto panel 40. According to such embodiments, the flight data and an enhanced view of objects 47 outside aircraft 10 may be displayed simultaneously on panel 40 (see, e.g., Fig. 2), providing the pilot and/or co-pilot with an enhanced view of the objects 47 outside aircraft 10 combined with visual representations 35 of flight data 33, for example, thereby creating an EFVS. This may enable the pilot and/or co-pilot to fly aircraft 10 in adverse weather conditions in which flight may not normally be permitted according to, for example, best safety practices and/or flight regulations.

According to some embodiments, imager 48 may be separated from the interior of cockpit 12. For example, imager 48 may be coupled to an exterior portion of aircraft 10, such as, for example, under the nose of aircraft 10 or below windshield 14. According to some embodiments, imager 48 may be coupled to the inside of windshield 14. For such embodiments, imager 48 may be separated from the interior of cockpit 14, for example, via a housing. The housing may be configured to permit imager 48 to have a relatively clear view through windshield 14, but substantially prevent the ingress of smoke and/or fumes into the housing in a way that might inhibit the view of imager 48 to objects outside cockpit 12, for example, such that smoke and/or fumes are not permitted between imager 48 and an interior of windshield 14 and inside the housing.

According to some embodiments, imager 48 may be a camera. According to some embodiments, imager 48 may include one or more of an infrared imager, a millimeter wave radiometer, millimeter wave radar, and a low level light intensifier. At least some of such embodiments may provide signals for image processor 50 that, when processed and projected onto panel 40, permit a pilot or copilot to effectively "see" through adverse weather conditions. For example, Fig. 2 depicts an exemplary panel 40 displaying both (1) visual representations 35 of flight data 33 and (2) objects 47 outside aircraft 10, including, for example, the horizon 54 and runway 56, thereby enhancing the view of outside aircraft 10 for the pilot and/or co-pilot.

As shown in Fig. 3, exemplary aircraft 10 may include a system 52 for enhancing vision inside the interior of cockpit 12. For example, if smoke and/or fumes are present in cockpit 12, it may impair or prevent the pilot or co-pilot from seeing one or more of instrument panel 30, gauges and displays 32 on instrument panel 30, primary display system 34 including panel 40, visual representations 35, or objects 47 outside windshield 14. This may render it extremely difficult to fly aircraft 10, which may prevent the pilot and/or co-pilot from safely landing aircraft 10, even if, for example, aircraft 10 is otherwise controllable.

According to some embodiments, system 52 may include a supplemental display system 58 for providing the pilot and/or co-pilot with one or more of visual representations 35 of flight data and/or objects 47 outside aircraft 10. For example, according to some embodiments, supplemental display system 58 may be configured to receive signals related to flight data from, for example, data processor 36, and display visual representations 35 based on the flight data. According to some embodiments, supplemental display system 58 may be configured to receive signals related to flight data from, for example, data processor 36 and and/or image processor 50 (e.g., via data processor 36), and display visual representations 35 based on the flight data and images based on objects 47 outside aircraft 10.

According to some embodiments, supplemental display system 58 may be configured to display augmented reality images inside cockpit 12 during low visibility conditions, such as, for example, during an emergency. Supplemental display system 58 is be configured to receive signals indicative of the physical layout of cockpit 12 and display images simulating the interior of cockpit 12, either alone or in addition to visual representations 35 based on the flight data and/or images based on objects 47 outside aircraft 10. Such signals may include data stored in system 52 in, for example, data processor 36, and the displayed images simulating the interior of cockpit 12 may be updated based on the location and/or orientation of the pilot or co-pilot relative to cockpit 12.

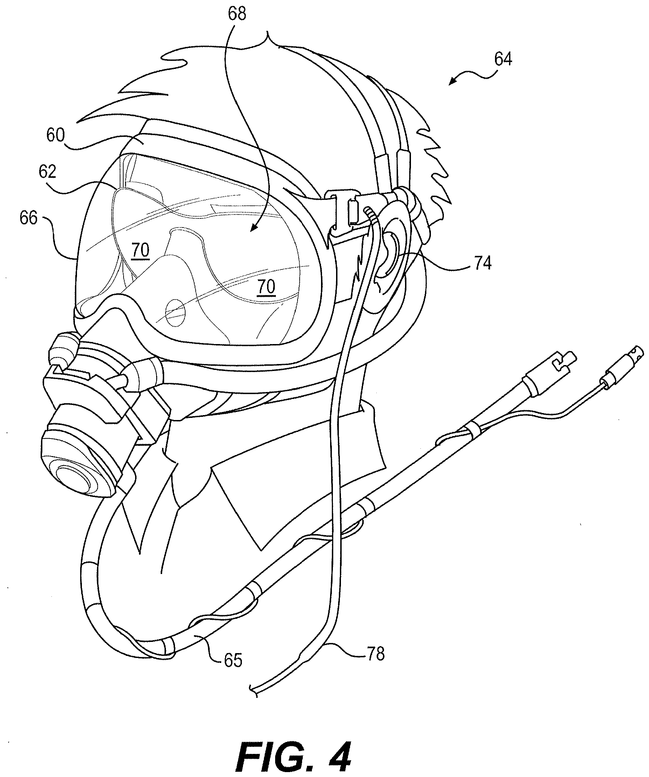

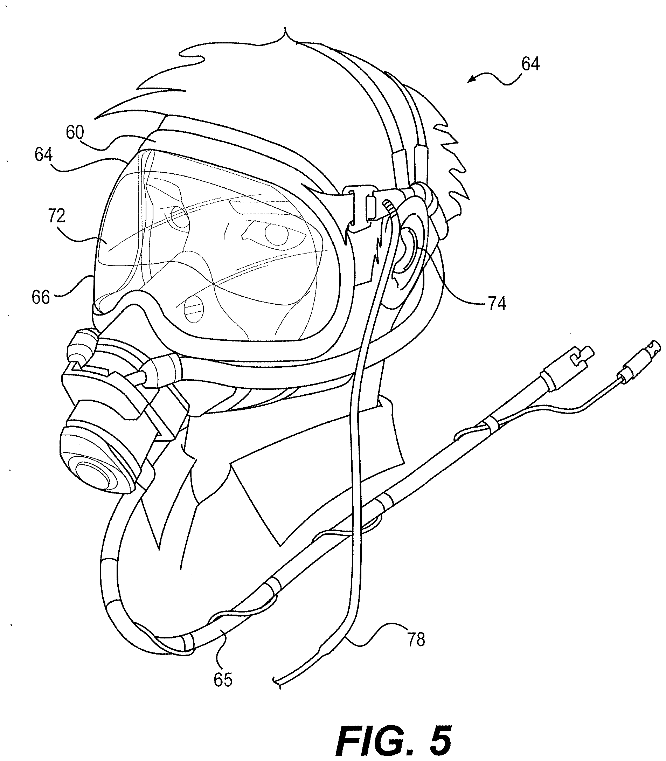

Display system 58 includes a mask 60 and a video display device 62, for example, as shown in Figs. 4 and 5. For example, mask 60 may be configured to provide a substantially sealed barrier between a wearer 64 via an oxygen line 65 of mask 60 (e.g., a pilot or co-pilot) and at least one of smoke and fumes in cockpit 12. For example, mask 60 may be configured to supply oxygen to wearer 64 in the event that oxygen is unavailable in the interior of cockpit 12 and/or smoke and/or fumes are present in cockpit 12. For example, mask 60 may be at least similar to conventional pilot oxygen masks.

According to some embodiments, mask 60 may include a shield 66 configured to protect wearer 64's eyes and/or to prevent ingress into mask 60 of smoke and/or fumes, thereby providing a clear view to the wearer of an inner side of shield 66, regardless of the presence of smoke and/or fumes in cockpit 12. Shield 66 may be substantially or wholly transparent and, according to some embodiments, may be tinted or coated with a coating configured to at least partially reflect or absorb at least some range of frequencies of visible light.

Video display device 62 is associated with mask 60, and is configured to receive the signals related to flight data from data processor 36 and display visual representations 35 based on the flight data. As shown in Figs. 4 and 5, video display device 62 is associated with mask 60 such that wearer 64 of mask 60 is able to see the visual representations based on the flight data displayed by video display device 62, for example, even when smoke and/or fumes are present in cockpit 12.

As shown in Fig. 4, exemplary video display device 62 may include glasses 68 configured to be worn inside mask 60 under shield 66. For example, video display device 62 may be video glasses configured to receive digital and/or analogue signals and display visibly on an inner side of lenses 70 of glasses 68 visual representations 35 of flight data and/or objects 47 outside aircraft 10, such that wearer 64 can view the visual representations 35 and/or objects 47 while wearing mask 60. For example, the visual representations may appear to wearer 64 at least similar to the exemplary visual representations 35 and/or objects 47 shown on panel 40 in Fig. 3. Glasses 68 may be video glasses such as those marketed by VUZIX®. Use of other video glasses is contemplated.

According to some embodiments, such as the exemplary embodiment shown in Fig. 5, video display device 62 may be associated with shield 66. For example, video display device 62 may be integrated into shield 66, such that shield 66 and video display device 62 form a single piece construction. For example, a portion of shield 66 may include a surface 72 configured to display the visual representations 35 of flight data and/or objects 47 outside aircraft 10, such that wearer 64 can view the visual representations 35 and/or objects 47 while wearing mask 60. For example, the visual representations 35 and objects 47 may appear to wearer 64 at least similar to the exemplary visual representations shown on panel 40 in Fig. 3.

According to some embodiments, supplemental display system 58 may also include an audio device 74 configured to provide audio information to wearer 64 of mask 60. For example, audio device 74 may be integrated into mask 60 such that mask 60 and audio device 74 form a single piece construction. For example, cockpit 12 may include an audio system 76 (see, e.g., Fig. 3), including one or more speakers configured to receive audio signals from data processor 36, and audio device 74 may be configured to use such signals to provide audio information to wearer 64 via mask 60. Audio information may include, for example, communications from outside aircraft 10, such as, for example, from air traffic controllers and warning beacons, and/or communications from inside aircraft 10, such as, for example, communications from the flight crew such as crew members inside the cabin/cargo area and inside cockpit 12, and/or flight control alarms, such as stall warnings.

Supplemental display system 58 is associated with data processor 36 to receive signals related to flight data from data processor 36 and optionally from and/or image processor 50 (e.g., via data processor 36). For example, supplemental display system 58 may be associated with data processor 36 via a communication link. For example, the communication link may be a wireless communication link (e.g., a shielded wireless link). According to some embodiments, the communication link may include a communication cord 78, as shown in Figs. 4 and 5, that couples mask 60 to data processor 36. According to some embodiments, communication cord 78 may be coupled directly to mask 60 and/or directly to data processor 36. For example, instrument panel 30 and/or data processor 36 may include a jack for receiving one end of communication cord 78, thereby directly coupling mask 60 to data processor 36, for example, without any intermediate signal processing device. For example, the jack may be configured to be compatible with conventional communication cables, such as, for example, S-Video, VGA, USB, RCA Composite A/V, or other similar communication cables. According to some embodiments, the other end of communication cord 78 may be coupled directly to video display device 62, for example, without any intermediate signal processing device. According to some embodiments, communication cord 78 may serve to couple audio device 74 to audio system 76. According to some embodiments, audio device 74 and audio system 76 may be coupled to one another via a separate cord or wireless link.

According to some embodiments, embodiments of the systems described previously herein may be used to perform a method of enhancing a view of visual representations based on flight data associated with flight of an aircraft when a cockpit of the aircraft contains at least one of smoke and fumes. For example, supplemental display system 58 may be used when smoke and/or fumes are present in the cockpit 12 of an aircraft 10, for example, when the presence of the smoke or fumes renders it difficult to use primary display system 34 to see flight data and/or objects outside aircraft 10, and/or to see out windshield 14. Such a condition may render it very difficult to fly and/or safely land aircraft 10, even though aircraft 10 may be controllable.

According to some embodiments, the method may include pilot and/or co-pilot donning mask 60 and coupling mask 60 to data processor 36 via a communication link. According to some embodiments, mask 60 may already be coupled to data processor 36, or mask 60 may be coupled to data processor 36 by coupling a communication cord 78 into a jack coupled directly to data processor 36 (e.g., without providing any intermediate processor for processing signals from data processor 36 before the signals reach communication cord 78, such that the signals are fed directly from data processor 36 to video display device 62 without further processing). According to some embodiments, the pilot and/or co-pilot may be able to view the visual representations of the flight data and/or objects outside aircraft 10, including, for example, terrain features and features associated with an airport and runway. According to some embodiments, the method includes coupling audio device 74 to audio system 76, either independently from coupling video display device 62 to data processor 36 or upon coupling video display device 62 to data processor 36 (e.g., upon coupling of communication cord 78 to data processor 36).

The method includes generating signals related to the flight data associated with flight of the aircraft. This may be performed by sensors aboard aircraft 10, or the signals may be received from external sources such as GPS or other communications. The method also includes supplying the signals to a data processor 36, which, in turn, provides signals related to the flight data associated with flight of aircraft 10 to a primary display system 34 configured to display visual representations based on the flight data. The method also includes associating a supplemental display system 58 with data processor 36, wherein the supplemental display system 58 includes a mask 60 configured to provide a substantially sealed barrier between the face of the pilot or co-pilot and the smoke and/or fumes, and a video display device 62 associated with the mask 60. The method also includes providing the signals indicative of the visual representations to the video display device 62, such that the pilot or co-pilot (i.e., wearing the mask 60) can view the visual representations via the video display device 62.

Data processor 36 is configured to provide the signals related to the flight data associated with flight of aircraft 10 to primary display system 34, and providing signals indicative of the visual representations to video display device 62 of supplemental display system 58 includes providing the signals intended for primary display system 34 to video display device 62 of supplemental display system 58. According to some embodiments, supplying signals to data processor 36 includes supplying signals indicative of terrain features outside aircraft 10 to data processor 36. The method may further include viewing the visual representations via video display device 62, wherein viewing the visual representations via video display device 62 includes viewing visual representations of the flight data and simulated terrain features via video display device 62.

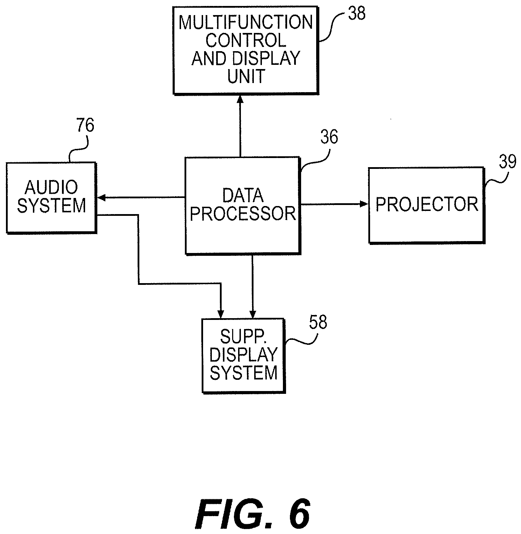

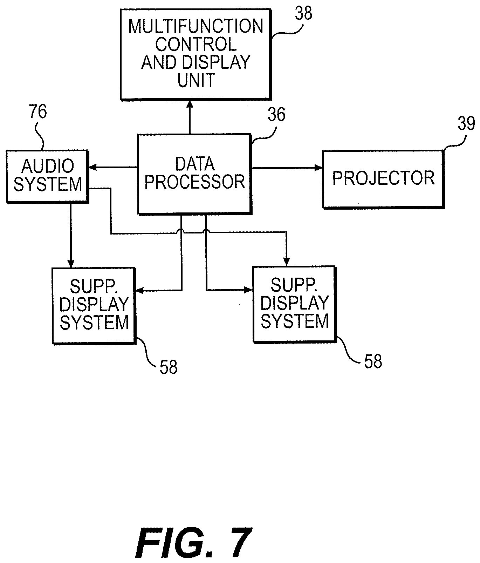

According to some embodiments the system 52 may be used to provide multiple viewers in a cockpit 12 of an aircraft 10 a common view of visual representations 35 of flight data associated with flight of the aircraft. For example, the system 52 may be used to permit both a pilot and a co-pilot to see a common view. According to some embodiments, the pilot may be able to use the primary display system 34 to view the visual representations 35, while the co-pilot uses the supplemental display system 58 to view the same or similar visual representations 35, for example, using an arrangement as schematically depicted in Fig. 6. According to some embodiments, the pilot may use the supplemental display system 58 to view the visual representations 35, while the co-pilot also uses the supplemental display system 58 to view the same or similar visual representations 35, for example, using an arrangement as schematically depicted in Fig. 7. According to this exemplary arrangement, the co-pilot wears a first video display device 62 and the pilot wears a second video display device 62.

The exemplary arrangements shown in Figs. 6 and 7 may be used either during actual flight of an aircraft, or for the purpose of simulation of an actual flight. In this latter scenario, the arrangement may be used for, for example, training.

Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A system for enhancing vision inside an aircraft cockpit (12), the system comprising:
a primary display system (34) configured to receive signals related to flight data (33) and display visual representations based on the flight data, the primary display system comprising:
a data processor (36) configured to output signals related to the flight data (33) associated with flight of the aircraft (10), and
a primary display device (37) configured to receive the signals related to flight data (33) and display visual representations based on the flight data;
a supplemental display system (58) configured to receive the signals related to the flight data (33) and display visual representations based on the flight data, the supplemental display system comprising:
a mask (60) configured to provide a substantially sealed barrier between a wearer (64) of the mask and at least one of smoke and fumes in the cockpit (12), and
a video display device (62) associated with the mask (60), the video display device being configured to receive the signals related to the flight data (33) and display the visual representations based on the flight data,
wherein the video display device (62) is associated with the mask (60) such that the wearer (64) of the mask is able to see the visual representations based on the flight data (33) displayed by the video display device, **characterized in that** the supplemental display system (58) is configured to receive signals indicative of a physical layout of the cockpit (12) and display images simulating an interior of the cockpit.

2. The system of claim 1, wherein the video display device (62) is associated with glasses (68) configured to be worn inside the mask (60).

3. The system of claim 1, wherein the mask (60) comprises a shield (66), and the video display device (62) is associated with the shield.

4. The system of claim 3, wherein the video display device (62) is integrated into the shield (66) such that the shield and the video display device form a single piece construction.

5. The system of claim 1, further comprising an imager (48) separated from the interior of the cockpit (12), wherein the imager is configured to provide signals indicative of terrain features outside the aircraft (10).

6. The system of claim 5, wherein the imager (48) is configured to be coupled to an exterior of the aircraft (10).

7. The system of claim 5, wherein the imager (48) is configured to be associated with an interior of a windshield (14) of the cockpit (12) and separated from the interior of the cockpit via a housing that prevents ingress of at least one of smoke and fumes between the imager and the interior of the windshield.

8. The system of claim 5, wherein the imager (48) comprises a camera or one of an infrared imager, a millimeter wave radiometer, millimeter wave radar, and a low level light intensifier.

9. The system of claim 1, wherein the primary display device comprises at least one of gauges and simulated gauges.

10. The system of claim 1, wherein the primary display device (37) comprises a panel (40) configured to display the visual representations based on the flight data (33), wherein the panel is at least one of transparent and semi-transparent such that it is possible for a viewer to simultaneously view the visual representations and objects on a side of the panel opposite the viewer.

11. The system of claim 1, further including an audio device (74) associated with the supplemental display system (58), wherein the audio device is configured to provide audio information to the wearer (64) of the mask (60).

12. The system of claim 11, wherein the audio device (74) is integrated into the mask (60) such that the mask and the audio device form a single piece construction.

13. The system of claim 1, wherein the supplemental display system (58) is configured to update the images simulating the interior of the cockpit (12) based on the location and/or orientation of a pilot or co-pilot relative to the cockpit.

14. The system of claim 1, wherein supplemental display system (58) is configured to display images simulating the interior of the cockpit (12) and at least one of visual representations based on the flight data (33) and images simulating terrain features exterior to the aircraft (10).

15. A method of enhancing a view of visual representations based on flight data (33) associated with flight of an aircraft (10) when a cockpit (12) of the aircraft contains at least one of smoke and fumes, the method comprising:
generating signals related to the flight data (33) associated with flight of the aircraft (10);
supplying the signals to a data processor (36) configured to provide signals related to the flight data (33) associated with flight of the aircraft (10) to a primary display device (37) configured to display visual representations based on the flight data;
associating a supplemental display apparatus (58) with the data processor (36), wherein the supplemental display apparatus comprises a mask (60) configured to provide a substantially sealed barrier between a wearer (64) of the mask and the at least one of smoke and fumes, and a video display device (62) associated with the mask; and
providing the signals indicative of the visual representations to the video display device (62), such that the wearer (64) of the mask (60) can view the visual representations via the video display device, **characterized in that** the method further comprises:
receiving, by the supplemental display apparatus (58), signals indicative of a physical layout of the cockpit (12); and
displaying, by the supplemental display apparatus (58), images simulating an interior of the cockpit (12).

## Patentansprüche

1. System zur Verbesserung der Sicht innerhalb eines Flugzeugcockpits (12), wobei das System umfasst:
ein primäres Anzeigesystem (34), das konfiguriert ist, um Signale bezüglich Flugdaten (33) zu empfangen und visuelle Darstellungen basierend auf den Flugdaten anzuzeigen, wobei das primäre Anzeigesystem umfasst:
einen Datenprozessor (36), der konfiguriert ist, um Signale bezüglich der Flugdaten (33), die dem Flug des Flugzeugs (10) zugeordnet sind, auszugeben, und
eine primäre Anzeigevorrichtung (37), die konfiguriert ist, um die Signale bezüglich Flugdaten (33) zu empfangen und visuelle Darstellungen basierend auf den Flugdaten anzuzeigen;
ein ergänzendes Anzeigesystem (58), das konfiguriert ist, um die Signale bezüglich der Flugdaten (33) zu empfangen und visuelle Darstellungen basierend auf den Flugdaten anzuzeigen, wobei das ergänzende Anzeigesystem umfasst:
eine Maske (60), die konfiguriert ist, um eine im Wesentlichen dichte Barriere zwischen einem Träger (64) der Maske und mindestens einem von Rauch und Dämpfen im Cockpit (12) bereitzustellen, und
eine der Maske (60) zugeordnete Videoanzeigevorrichtung (62), wobei die Videoanzeigevorrichtung konfiguriert ist, um die Signale bezüglich der Flugdaten (33) zu empfangen und die visuellen Darstellungen basierend auf den Flugdaten anzuzeigen,
wobei die Videoanzeigevorrichtung (62) der Maske (60) so zugeordnet ist, dass der Träger (64) der Maske in der Lage ist, die visuellen Darstellungen basierend auf den Flugdaten (33) zu sehen, die von der Videoanzeigevorrichtung angezeigt werden,
**dadurch gekennzeichnet, dass**
das ergänzende Anzeigesystem (58) konfiguriert ist, um Signale zu empfangen, die für eine physische Anordnung des Cockpits (12) bezeichnend sind, und Bilder anzuzeigen, die ein Inneres des Cockpits simulieren.

2. System nach Anspruch 1, wobei die Videoanzeigevorrichtung (62) einer Brille (68) zugeordnet ist, die konfiguriert ist, um innerhalb der Maske (60) getragen zu werden.

3. System nach Anspruch 1, wobei die Maske (60) eine Abschirmung (66) umfasst und die Videoanzeigevorrichtung (62) der Abschirmung zugeordnet ist.

4. System nach Anspruch 3, wobei die Videoanzeigevorrichtung (62) in die Abschirmung (66) so integriert ist, dass die Abschirmung und die Videoanzeigevorrichtung eine einstückige Konstruktion bilden.

5. System nach Anspruch 1, ferner umfassend einen vom Inneren des Cockpits (12) getrennten Bildgeber (48), wobei der Bildgeber konfiguriert ist, um Signale bereitzustellen, die für Geländemerkmale außerhalb des Flugzeugs (10) bezeichnend sind.

6. System nach Anspruch 5, wobei der Bildgeber (48) konfiguriert ist, um mit einem Äußeren des Flugzeugs (10) verbunden zu werden.

7. System nach Anspruch 5, wobei der Bildgeber (48) konfiguriert ist, um einem Inneren einer Windschutzscheibe (14) des Cockpits (12) zugeordnet und vom Inneren des Cockpits über ein Gehäuse getrennt zu sein, das das Eindringen von mindestens einem von Rauch und Dämpfen zwischen dem Bildgeber und dem Inneren der Windschutzscheibe verhindert.

8. System nach Anspruch 5, wobei der Bildgeber (48) eine Kamera oder einen von einem Infrarotbildgeber, einem Millimeterwellen-Radiometer, Millimeterwellen-Radar und einem Niedrigpegel-Lichtverstärker umfasst.

9. System nach Anspruch 1, wobei die primäre Anzeigevorrichtung mindestens eines von Messgeräten und simulierten Messgeräten umfasst.

10. System nach Anspruch 1, wobei die primäre Anzeigevorrichtung (37) ein Panel (40) umfasst, das konfiguriert ist, um die visuellen Darstellungen basierend auf den Flugdaten (33) anzuzeigen, wobei das Panel mindestens eines von transparent und halbtransparent ist, so dass es einem Betrachter möglich ist, gleichzeitig die visuellen Darstellungen und Objekte auf einer dem Betrachter gegenüberliegenden Seite des Panels zu betrachten.

11. System nach Anspruch 1, ferner umfassend ein Audiogerät (74), das dem ergänzenden Anzeigesystem (58) zugeordnet ist, wobei das Audiogerät konfiguriert ist, um dem Träger (64) der Maske (60) Audioinformationen bereitzustellen.

12. System nach Anspruch 11, wobei das Audiogerät (74) in die Maske (60) so integriert ist, dass die Maske und das Audiogerät eine einstückige Konstruktion bilden.

13. System nach Anspruch 1, wobei das ergänzende Anzeigesystem (58) konfiguriert ist, um die Bilder, die das Innere des Cockpits (12) simulieren, basierend auf dem Ort und/oder der Ausrichtung eines Piloten oder Copiloten relativ zum Cockpit zu aktualisieren.

14. System nach Anspruch 1, wobei das ergänzende Anzeigesystem (58) konfiguriert ist, um Bilder, die das Innere des Cockpits (12) simulieren, und mindestens eine von visuellen Darstellungen basierend auf den Flugdaten (33) und Bildern, die Geländemerkmale außerhalb des Flugzeugs (10) simulieren, anzuzeigen.

15. Verfahren zum Verbessern einer Ansicht von visuellen Darstellungen basierend auf Flugdaten (33), die dem Flug eines Flugzeugs (10) zugeordnet sind, wenn ein Cockpit (12) des Flugzeugs mindestens eines von Rauch und Dämpfen enthält, wobei das Verfahren umfasst:
Erzeugen von Signalen bezüglich der Flugdaten (33), die dem Flug des Flugzeugs (10) zugeordnet sind;
Liefern der Signale an einen Datenprozessor (36), der konfiguriert ist, um Signale bezüglich der Flugdaten (33), die dem Flug des Flugzeugs (10) zugeordnet sind, an eine primäre Anzeigevorrichtung (37) bereitzustellen, die konfiguriert ist, um visuelle Darstellungen basierend auf den Flugdaten anzuzeigen;
Verbinden einer ergänzenden Anzeigevorrichtung (58) mit dem Datenprozessor (36), wobei die ergänzende Anzeigevorrichtung eine Maske (60), die konfiguriert ist, um eine im Wesentlichen dichte Barriere zwischen einem Träger (64) der Maske und dem mindestens einen von Rauch und Dämpfen bereitzustellen, und eine der Maske zugeordnete Videoanzeigevorrichtung (62) umfasst; und
Bereitstellen der Signale, die für die visuellen Darstellungen bezeichnend sind, an die Videoanzeigevorrichtung (62), so dass der Träger (64) der Maske (60) die visuellen Darstellungen über die Videoanzeigevorrichtung betrachten kann,
**dadurch gekennzeichnet, dass** das Verfahren ferner umfasst:
Empfangen, durch die ergänzende Anzeigevorrichtung (58), von Signalen, die für eine physische Anordnung des Cockpits (12) bezeichnend sind; und
Anzeigen, durch die ergänzende Anzeigevorrichtung (58), von Bildern, die ein Inneres des Cockpits (12) simulieren.

## Revendications

1. Système destiné à améliorer la vision à l'intérieur d'un poste de pilotage d'aéronef (12), le système comprenant :
un système d'affichage principal (34) configuré pour recevoir des signaux relatifs aux données de vol (33) et afficher des représentations visuelles sur la base des données de vol, le système d'affichage principal comprenant :
un processeur de données (36) configuré pour délivrer en sortie des signaux relatifs aux données de vol (33) associées au vol de l'aéronef (10), et
un dispositif d'affichage principal (37) configuré pour recevoir les signaux relatifs aux données de vol (33) et afficher des représentations visuelles sur la base des données de vol ; un système d'affichage supplémentaire (58) configuré pour recevoir les signaux relatifs aux données de vol (33) et afficher des représentations visuelles sur la base des données de vol, le système d'affichage supplémentaire comprenant :
un masque (60) configuré pour fournir une barrière sensiblement étanche entre un porteur (64) du masque et au moins l'un d'une fumée et d'émanations dans le poste de pilotage (12), et
un dispositif d'affichage vidéo (62) associé au masque (60), le dispositif d'affichage vidéo étant configuré pour recevoir les signaux relatifs aux données de vol (33) et afficher les représentations visuelles sur la base des données de vol,
ledit dispositif d'affichage vidéo (62) étant associé au masque (60) de sorte que le porteur (64) du masque soit capable de voir les représentations visuelles sur la base des données de vol (33) affichées par le dispositif d'affichage vidéo, **caractérisé en ce que**
le système d'affichage supplémentaire (58) est configuré pour recevoir des signaux indiquant une disposition physique du poste de pilotage (12) et afficher des images simulant un intérieur du poste de pilotage.

2. Système selon la revendication 1, ledit dispositif d'affichage vidéo (62) étant associé à des lunettes (68) configurées pour être portées à l'intérieur du masque (60).

3. Système selon la revendication 1, ledit masque (60) comprenant un écran (66), et ledit dispositif d'affichage vidéo (62) étant associé à l'écran.

4. Système selon la revendication 3, ledit dispositif d'affichage vidéo (62) étant intégré dans l'écran (66) de sorte que l'écran et le dispositif d'affichage vidéo forment une construction monobloc.

5. Système selon la revendication 1, comprenant en outre un imageur (48) séparé de l'intérieur du poste de pilotage (12), ledit imageur étant configuré pour fournir des signaux indiquant des caractéristiques du terrain à l'extérieur de l'aéronef (10).

6. Système selon la revendication 5, ledit imageur (48) étant configuré pour être couplé à un extérieur de l'aéronef (10).

7. Système selon la revendication 5, ledit imageur (48) étant configuré pour être associé à un intérieur d'un pare-brise (14) du poste de pilotage (12) et séparé de l'intérieur du poste de pilotage par l'intermédiaire d'un boîtier qui empêche l'entrée d'au moins l'une d'une fumée et d'émanations entre l'imageur et l'intérieur du pare-brise.

8. Système selon la revendication 5, ledit imageur (48) comprenant une caméra ou l'un d'un imageur infrarouge, d'un radiomètre à ondes millimétriques, d'un radar à ondes millimétriques et d'un intensificateur de faible niveau de lumière.

9. Système selon la revendication 1, ledit dispositif d'affichage principal comprenant au moins l'une parmi des jauges et des jauges simulées.

10. Système selon la revendication 1, ledit dispositif d'affichage principal (37) comprenant un panneau (40) configuré pour afficher les représentations visuelles sur la base des données de vol (33), ledit panneau étant au moins l'un de transparent et semi-transparent de sorte qu'un spectateur puisse visualiser simultanément les représentations visuelles et les objets sur un côté du panneau opposé au spectateur.

11. Système selon la revendication 1, comprenant en outre un dispositif audio (74) associé au système d'affichage supplémentaire (58), ledit dispositif audio étant configuré pour fournir des informations audio au porteur (64) du masque (60).

12. Système selon la revendication 11, ledit dispositif audio (74) étant intégré au masque (60) de sorte que le masque et le dispositif audio forment une construction monobloc.

13. Système selon la revendication 1, ledit système d'affichage supplémentaire (58) étant configuré pour mettre à jour les images simulant l'intérieur du poste de pilotage (12) sur la base de l'emplacement et/ou de l'orientation d'un pilote ou copilote par rapport au poste de pilotage.

14. Système selon la revendication 1, ledit système d'affichage supplémentaire (58) étant configuré pour afficher des images simulant l'intérieur du poste de pilotage (12) et au moins l'une des représentations visuelles sur la base des données de vol (33) et des images simulant des caractéristiques de terrain extérieures à l'aéronef (10).

15. Procédé d'amélioration d'une vue de représentations visuelles sur la base de données de vol (33) associées au vol d'un aéronef (10) lorsqu'un poste de pilotage (12) de l'aéronef contient au moins l'une d'une fumée et d'émanations, le procédé comprenant :
la génération des signaux relatifs aux données de vol (33) associées au vol de l'aéronef (10) ;
la fourniture des signaux à un processeur de données (36) configuré pour fournir des signaux relatifs aux données de vol (33) associées au vol de l'aéronef (10) à un dispositif d'affichage principal (37) configuré pour afficher des représentations visuelles sur la base des données de vol ;
l'association d'un appareil d'affichage supplémentaire (58) au processeur de données (36), ledit appareil d'affichage supplémentaire comprenant un masque (60) configuré pour fournir une barrière sensiblement étanche entre un porteur (64) du masque et l'au moins une d'une fumée et d'émanations, et un dispositif d'affichage vidéo (62) associé au masque ; et
la fourniture des signaux indiquant des représentations visuelles au dispositif d'affichage vidéo (62), de sorte que le porteur (64) du masque (60) puisse visualiser les représentations visuelles par l'intermédiaire du dispositif d'affichage vidéo,
**caractérisé en ce que** le procédé comprend en outre :
la réception, par l'appareil d'affichage supplémentaire (58), des signaux indiquant une disposition physique du poste de pilotage (12) ; et
l'affichage, par l'appareil d'affichage supplémentaire (58), des images simulant un intérieur du poste de pilotage (12).
